# EUROPÄISCHE PATENTSCHRIFT

(11) **EP 1 082 816 B1**
(45) Veröffentlichungstag und Bekanntmachung des Hinweises auf die Patenterteilung: **02.01.2004**
(21) Anmeldenummer: 99936340.1
(22) Anmeldetag: 28.05.1999
(51) Int. Cl.: H03K 21/40, G07F 7/10

(54) **VERFAHREN UND ANORDNUNG ZUM BETREIBEN EINES MEHRSTUFIGEN ZÄHLERS IN EINER ZÄHLRICHTUNG**
METHOD AND SYSTEM FOR OPERATING A MULTI-STAGE COUNTER IN ONE COUNTING DIRECTION
PROCEDE ET DISPOSITIF POUR ACTIONNER UN COMPTEUR MULTIETAGE DANS UN SENS DE COMPTAGE

(30) Priorität: 28.05.1998 DE 19823955
(43) Veröffentlichungstag der Anmeldung: 14.03.2001
(73) Patentinhaber: Infineon Technologies AG, 81669 München (DE)
(72) Erfinder: ALLINGER, Robert, D-82008 Unterhaching (DE); HOLLFELDER, Robert, D-81827 München (DE); POCKRANDT, Wolfgang, D-85293 Reichertshausen (DE); WEDEL, Armin, D-86415 Mering (DE)
(74) Vertreter: Hermann, Uwe, Dipl.-Ing.
(86) Internationale Anmeldenummer: PCT/DE1999/001570
(87) Internationale Veröffentlichungsnummer: WO 1999/062176

(56) Entgegenhaltungen:
- FR-A- 2 733 615
- GB-A- 2 187 011
- US-A- 5 381 452
- PATENT ABSTRACTS OF JAPAN vol. 014, no. 282 (E-0942), 19. Juni 1990 (1990-06-19) & JP 02 090726 A (HIROMICHI NAMIKOSHI), 30. März 1990 (1990-03-30)
- PATENT ABSTRACTS OF JAPAN vol. 008, no. 247 (E-278), 13. November 1984 (1984-11-13) & JP 59 123322 A (FUJITSU KK), 17. Juli 1984 (1984-07-17)

## Beschreibung

Die Erfindung betrifft ein Verfahren und eine Anordnung zum Betreiben eines mehrstufigen Zählers in einer Zählrichtung.

Heutzutage sind beliebig viele Anwendungsgebiete bekannt, bei denen eine Ereigniszählung stattfinden soll. Diese Ereignisse kann die Häufigkeit der Benutzung eines Gerätes, das Passieren von Personen oder Fahrzeugen oder Gegenständen, die Erfassung eines Telefonzähltaktes, aber auch die Erfassung einer Fahrleistung, sprich Kilometerzähler bei einem PKW oder Betriebsstundenzähler eines beliebigen Gerätes und nicht zuletzt die erfaßte Arbeitszeit bzw. Anwesentheitszeit eines Arbeitnehmers an seinem Arbeitsplatz sein. All diese Fälle sind dadurch gekennzeichnet, daß sie mit möglichst hoher Genauigkeit erfaßt werden, d. h. das in der Regel ein hoher Wertebereich von Zählwerten abgedeckt wird. Weiterhin ist bei den genannten Fällen in der Regel der Wunsch vorhanden, daß das Zählergebnis nicht manipulierbar, d. h. nicht rücksetzbar ist. Eine derartige Forderung läßt sich sicher mit einem einstufigen Zähler realisieren, der nur von seinem bisherigen Zählerstand aus aufwärts oder abwärts zählen kann. Dies läßt sich einfach beispielsweise mittels eines EEPROM realisieren, wobei dann für jeden Zählwert eine EEPROM-Zelle vorzusehen ist, und daß EEPROM entweder nur beschreibbar oder nur löschbar ist, je nachdem ob eine Aufwärts- oder Abwärtszählung vorgesehen ist.

Für die zuerst genannte Forderung, daß nämlich ein möglichst großer Wertebereich vom Zähler zu erfassen ist, führt dann zu dem Ergebnis, daß bei einer solchen Realisierung ein EEPROM-Speicher mit entsprechend vielen Speicherzellen vorzusehen ist. In Zahlen ausgedrückt heißt dies, daß zum Beispiel zum Erreichen eines maximalen Zählerstandes von 255 genau 255 Zählerzellen benötigt werden. Nunmehr ist es jedoch heutzutage üblich, derartige Anordnungen möglichst klein aufzubauen. Die Verwendung eines mehrstufigen Zählers mit 8 Bit, d. h. 8 Zählerzellen führt ebenfalls zu einem maximalen Zählerstand von 255. Ein derartiger mehrstufiger Zähler (8-Bit-Binärzähler) weist jedoch den Nachteil auf, daß bei einer Veränderung der nächsten Zählerstelle die vorangegangene Zählerstelle zurückgesetzt wird. Dies führt dazu, daß die Realisierüng eines mehrstufigen Zählers, der nur in einer Richtung zählt und gleichzeitig nicht manipulierbar ist, nur sehr schwer realisierbar ist.

Aus der EP 0 321 727 ist eine Schaltungsanordnung beschrieben, bei der mehrere EEPROM-Zellen in einer Reihe angeordnet sind. Dabei sind wiederum mehrere Reihen zusammengeschaltet sind. Die Speicherzellen jeweils einer Reihe stellen ein einheitliches Wertigkeitsniveau dar, wobei die Speicherinhalte einer Reihe, mittels einer logischen Überwachung nur dann löschbar sind, wenn ein Übertrag in die nächst höhere Reihe erfolgt ist. Die in dieser Druckschrift offenbarte Anordnung weist genau die zuvor erläuterten Nachteile der Manipulierbarkeit auf, indem durch Einflußnahme auf die logische Schaltung das unidirektionale Zählen nicht mit Sicherheit gewährleistet ist. Eine ähnliche nur etwas aufwendiger gestaltete Anordnung ist in der EP 0 618 591 ausgeführt, wobei für jede nächst höhere Reihe zum Umschreiben eine Hilfsspeicherzelle vorgesehen ist, die programmierbar und auch wieder löschbar ist, wobei auch diese Anordnung leicht manipulierbar ist, da die Hilfsspeicherzellen sowohl schreib- als auch löschbar sind.

Aus JP 02 090726A ist eine Anordnung zum Messen eines Signals A mit zwei Zählern 4 und 6 beschrieben. Das periodische Signal A wird den beiden Zählern jeweils über ein Gatter 1 und 2 zugeführt. Dabei ist die jeweilige Öffnungszeit der beiden Gatter um den Faktor 1/N verschieden. Das Zählergebnis des Zählers 4 wird solange blinkend angezeigt, bis das Verhältnis zwischen den beiden Zählergebnissen ebenfalls 1/N beträgt. Dann wird das Ergebnis des Zählers 4 feststehend angezeigt. Folglich ist das Zählergebnis der beiden Zähler nicht von einander abhängig sondern von der Frequenz des Signals A und dem Verhältnis der Öffnungszeiten der beiden Gatter 1 und 2.

Der Erfindung liegt somit die Aufgabe zugrunde, ein Verfahren bzw. eine Schaltungsanordnung zum Betreiben eines mehrstufigen Zählers vorzusehen, bei dem die Manipulationssicherheit erhöht ist.

Diese Aufgabe wird erfindungsgemäß mit den in Patentanspruch 1 bzw. 4 angegebenen Maßnahmen gelöst.

Durch das gleichzeitige Betreiben eines einstufigen Zählers, der nur entweder aufwärts oder abwärts zählt neben dem mehrstufigen Zähler, der das eigentliche Ereignis zählt, ist über ein Vergleich sichergestellt, daß der Zählwert des mehrstufigen Zählers zumindest in der Größenordnung, mit dem Zählwert des einstufigen Zählers übereinstimmt. Damit ist mit einfachen Mitteln die Möglichkeit zur Manipulation beseitigt. Ist die Übereinstimmung mit einem vorgegebenen Verhältnis zwischen den beiden Zählern nicht gegeben, so zeigt das Indikationssignal gemäß Anspruch 2 die fehlende Zulässigkeit an, wobei überprüft wird, ob der Zählwert des einstufigen Zählers mit dem Zählwert des mehrstufigen Zählers in einem vorbestimmten Verhältnis steht. Gemäß Patentanspruch 3 ist die Zulässigkeit bei Übereinstimmung der Zählwerte gegeben.

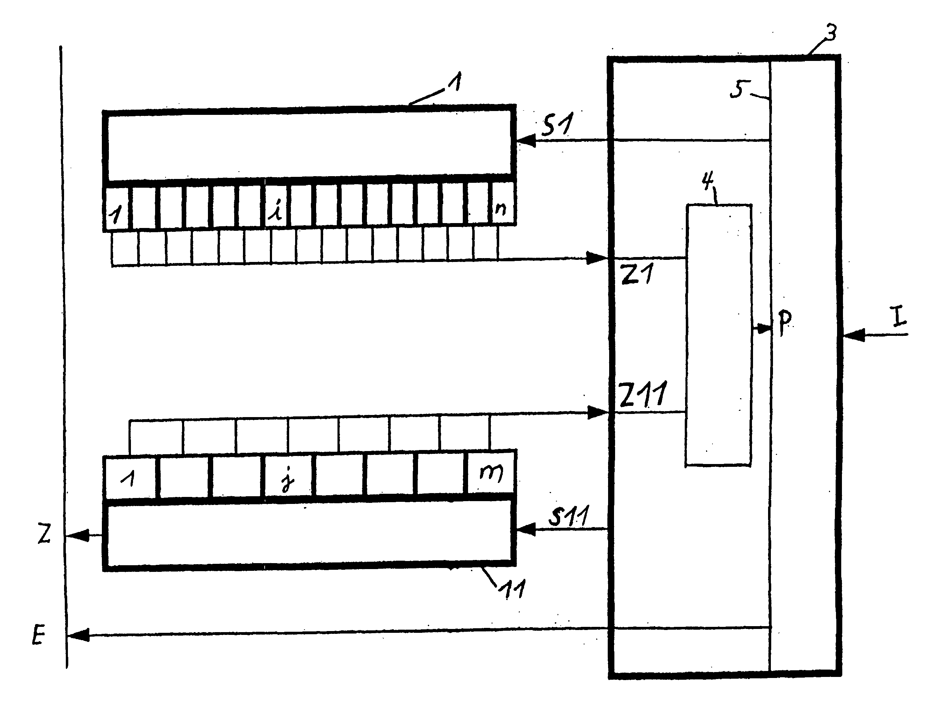

Nachfolgend wird die Erfindung unter Bezugnahme auf die Figur beschrieben, wobei ein Ausführungsbeispiel in Form eines Blockschaltbildes dargestellt ist.

Das in der Figur dargestellte Ausführungsbeispiel weist einen m-stufigen Zähler mit m = 8 auf. Dieser ist in der Darstellung als 8-Bit-Binärzähler zu verstehen. Der Zähler 11 kann somit von 0 bis 255 zählen, d. h. 256 Zählstellen. Der Zähler 11 ist mit einer Steuereinheit 3 verbunden, die dem Zähler 11 ein Zählsignal S11 zuführt. Mit jedem Zuführen des Zählsignals S11 wird der Zähler 11 um 1 verändert, wobei die Veränderung in gleicher Richtung wie eine vorangegangene Änderung erfolgt. Das bedeutet, daß der in der Figur symbolisch dargestellte Zähler derart gestaltet ist, daß er entweder aufwärts oder nur abwärts zählt. Der jeweilige Zählerstand des mehrstufigen Zählers 11 wird als Zählwertsignal Z11 einer Prüflogik 4 zugeführt. Weiterhin ist ein einstufiger Zähler 1 vorgesehen, der bei diesem Ausführungsbeispiel n-Zellen mit n = 16 aufweist. Dieser in der Figur symbolisch dargestellte Zähler soll so aufgebaut sein, daß er ebenfalls nur in einer Zählrichtung zählt, nämlich von 0 bis 15, d. h. 16 Zählstellen. Der einstufige Zähler 1 erhält von der Steuereinheit 3 ein Zählsignal S1, worauf er um einen Zählwert weitergesetzt wird. Der Zählstand des einstufigen Zählers 1 wird der Steuereinheit 3 als Kontrollzählwertsignal Z1 und damit der Prüflogik 4 zugeführt. Die Prüflogik 4 vergleicht das Zählwertsignal Z11 mit dem Kontrollzählwertsignal Z1 und gibt ein in Abhängigkeit vom Vergleich bestimmtes Signal an eine Zählersteuerung 5 ab. Die Zählersteuerung 5 wiederum gibt in Abhängigkeit von dem von der Prüflogik 4 erhaltenen Prüfsignal P ein Fehlersignal E ab.

Die beiden Zähler 11 und 1 können beispielsweise als EEPROM-Zellen ausgebildet sein. Hierbei ist vorgesehen, daß entsprechend dem bekannten Betreiben eines Binärzählers die einzelnen Speicherzellen gemäß den Regeln des Aufwärts- oder Abwärtszählen beschrieben oder gelöscht werden. Genauso ist auch der.einstufige Kontrollzähler 1 aus EEPROM-Zellen zusammengesetzt, wobei die einzelnen Zellen 1 bis n nacheinanderfolged, nur beschrieben oder nur gelöscht werden können.

Nunmehr wird der typische Betrieb der in der Figur dargestellten Anordnung beschrieben. Grundsätzlich ist vorgesehen, daß mit jedem Eingabesignal I von der Steuereinheit 3 ein Zählsignal S11 abgegeben werden soll. Dabei wird zuvor von der Prüflogik 4 die Zählerstände der beiden Zähler 1 und 11 mittels des Zählwertsignals Z11 und des Kontrollzählwertsignal Z1 überprüft. Sind beide beispielsweise 0, stellt die Prüflogik 4 fest, daß die Übereinstimmung besteht und läßt über das Prüfsignal P zu, daß über die Zählersteuerung 5 das Zählsignal S11 ausgegeben wird.

Nunmehr ist vorgesehen, daß beide Zähler von 0 bis 255 zählen. Das bedeutet, daß der einstufige Kontrollzähler 1 bei jedem sechzehnten Zählsignal S11, das an den mehrstufigen Zähler 11 geht ebenfalls von der Zählersteuerung 5 in der Steuereinheit 3 ein Kontrollzählsignal S1 erhält. Für den unmanipulierten Betrieb ist die Prüflogik nunmehr so ausgelegt, daß sie überwacht, daß der Zählwert des Zählers 11 zu dem gerade erreichten Zählwert des Kontrollzählers 1 paßt. D. h. bei dem dargestellten Ausführungsbeispiel darf der Zählwert des Zählers 11 nicht kleiner sein als (i x 16) - 1 sein. Entsprechendes gilt für eine abwärts zählende Anordnung, auch hier muß der Zähler 11 entsprechend der Zähllogik sich in einem zum Zählwert des Kontrollzählers 1 passenden Bereich befinden.

Sobald die Prüflogik 4 keine Übereinstimmung feststellt, wird ein Fehlersignal F abgegeben.

Die Erfindung ist jedoch nicht auf das in der Figur dargestellte Ausführungsbeispiel beschränkt. Vielmehr ist auch vorstellbar, daß insbesondere bei einem sehr großen zu überschreitenden Zählwertebereich des Zählers 11 zum Einsparen von Zählerzellen des einstufigen Zählers, dieser nicht linear betrieben wird, sondern beispielsweise dekadisch. D. h. der einstufige Zähler würde beispielsweise beim 10., 100., 1000. usw. Zählsignal S11 von der Zählersteuerung 5 ein Kontrollzählsignal S1 erhalten. Zur Überwachung des unmanipulierten Betriebes muß die Prüflogik 4 entsprechend aufgebaut sein, d. h. in einem solchen Fall muß der Zählwert des Zählers 11 der dem jeweiligen Zählwert des Kontrollzählers 1 zugeordneten Größenordnung entsprechen. Genauso gut ist vorstellbar, daß der Zusammenhang zwischen dem Zähler des Zählers 11 und dem Zählwert des Kontrollzählers 1 einer logarithmischen, exponentiellen oder beliebig anderen geeigneten und gewünschten Funktionen entspricht. Dies ist dann sowohl auf aufwärtszählende als auch auf abwärtszählende Zähleranordnungen anwendbar.

Abschließend sei darauf hingewiesen, daß der Zähler 11 und der Kontrollzähler 1 nicht zwangsläufig in der gleichen Richtung zählen müssen. Vielmehr kann auch vorgesehen sein, daß der eine Zähler aufwärts und der jeweils andere Zähler abwärts zählt. Die alleinige Voraussetzung für einen unmanipulierten Betrieb ist, daß der Kontrollzähler nur in einer Richtung zählt und die Prüflogik 4 derart aufgebaut ist, daß der Zählwert des Zählers 11 mit dem Zählwert des Kontrollzählers 1 einen logischen Zusammenhang aufweist.

## Patentansprüche

1. Verfahren zum Betreiben eines mehrstufigen Zählers in nur einer Zählrichtung mit den Schritten:
- Verändern des Zählwertes eines einstufigen nur in einer Zahlrichtung veränderbaren Zählers bei vorbestimmten Zählwertzuständen des mehrstufigen Zählers,
- erfassen der jeweiligen Zählwertzustände des mehrstufigen Zählers und des einstufigen Hilfszählers,
- vergleichen der Werte der erfaßten Zählwertzustände des einstufigen und des mehrstufigen Zählers, und
- erzeugen eines Indikatorsignales aufgrund des Vergleichsergebnisses, wobei bei Vorliegen einer Übereinstimmung der Zällwertzustände eine Veränderung des mehrstufigen Zählers zugelossen wird.

2. Verfahren nach Anspruch 1,
bei dem das Indikatorsignal die Zulässigkeit des Zählwertes des mehrstufigen Zählers anzeigt, wenn dieser in einem vorbestimmten Verhältnis zum Zählwertstand des einstufigen Zählers steht.

3. Verfahren nach Anspruch 2,
bei dem das Indikatorsignal die Zulässigkeit des Zählwertes des mehrstufigen Zählers anzeigt, daß der Zählwert des mehrstufigen Zählers mit dem Zählwert des einstufigen Zählers übereinstimmt.

4. Schaltungsanordnung zum Durchführen des Verfahrens nach einem der Ansprüche 1 bis 3, mit
einem mehrstufigen nur aufwärts öder abwärts zählenden Zählers (11), bei dem der Zählwert einer Stufe beim Verändern eines Zählwertes der nachfolgenden Stufe auf einen Anfangswert zurückgesetzt wird,
einem einstufigen Hilfszähler (1), der nur aufwärts oder nur abwärts zählend betrieben wird, und der bei vorbestimmten Zählwerten des mehrstufigen Zählers (11) verändert wird, und
einer Vergleichseinrichtung (4), die mit dem Zähler (11) und dem Hilfszähler (1) derart verbunden ist, daß sie die Zählwerte (Z1 und Z11) der beiden Zähler jeweils vergleicht und ein dem Vergleich entsprechendes Signal ausgibt, das die Veränderung des mehrstufigen Zählers (11) zuläßt.

## Claims

1. Method of operating a multistage counter in only one counting direction, having the following steps:
- changing the counter reading of a single-stage counter that can be changed in only one direction at predetermined counter readings of the multistage counter,
- registering the respective counter readings of the multistage counter and of the single-stage auxiliary counter,
- comparing the values of the registered counter readings of the single-stage and of the multistage counters, and
- generating an indicator signal on the basis of the result of the comparison, in which case, when there is agreement between the counter readings, a change in the multistage counter is permitted.

2. Method according to Claim 1, in which the indicator signal indicates the reliability of the counter reading of the multistage counter if said reading is in a predetermined relationship with the counter reading of the single-stage counter.

3. Method according to Claim 2, in which the indicator signal indicates the reliability of the counter reading of the multistage counter that [sic] the counter reading of the multistage counter agrees with the counter reading of the single-stage counter.

4. Circuit arrangement for implementing the method according to one of Claims 1 to 3, having
a multistage counter (11) which counts only upwards or downwards and in which the counter reading of one stage is reset to an initial value when a counter reading of the following stage is changed,
a single-stage auxiliary counter (1), which is operated such that it counts only upwards or only downwards and which is changed at predetermined counter readings of the multistage counter (11), and
a comparison device (4), which is connected to the counter (11) and the auxiliary counter (1) in such a way that it compares the counter readings (Z1 and Z11) of the two counters in each case and outputs a signal corresponding to the comparison which permits the change in the multistage counter (11).

## Revendications

1. Procédé d'exploitation d'un compteur à étages multiples dans un seul sens de comptage, comportant les étapes consistant à :
- faire varier la valeur de comptage d'un compteur à un seul étage, qui ne peut varier que dans un seul sens de comptage, pour des états de valeur de comptage prédéterminés du compteur à étages multiples,
- déterminer les états respectifs des valeurs de comptage du compteur à étages multiples et du compteur auxiliaire à un seul étage,
- comparer les valeurs des états déterminés des valeurs de comptage du compteur à un seul étage et du compteur à étages multiples, et
- générer un signal d'indication en se fondant sur le résultat de la comparaison, l'existence d'une concordance des états des valeurs de comptage permettant de faire varier le compteur à étages multiples.

2. Procédé selon la revendication 1, dans lequel le signal d'indication indique l'admissibilité de la valeur de comptage du compteur à étages multiples lorsque cette valeur est dans un rapport prédéterminé avec l'état de la valeur de comptage du compteur à un seul étage.

3. Procédé selon la revendication 2, dans lequel le signal d'indication indique l'admissibilité de la valeur de comptage du compteur à étages multiples lorsque la valeur de comptage du compteur à étage multiple concorde avec la valeur de comptage du compteur à un seul étage.

4. Montage de circuit destiné à mettre en oeuvre le procédé selon l'une des revendications 1 à 3, comportant
un compteur à étages multiples (11) ne faisant que compter ou que décompter, dans lequel la valeur de comptage d'un étage est réinitialisée à une valeur de départ lorsqu'une valeur de comptage de l'étage suivant est modifié,
un compteur auxiliaire à un seul étage (1), qui ne fonctionne qu'en mode comptage ou qu'en mode décomptage, et qui est modifié que pour des valeurs de comptage prédéterminée du compteur à étages multiples (11), et
un dispositif de comparaison (4) qui est relié au compteur (11) et au compteur auxiliaire (1) de façon à comparer à chaque fois les valeurs de comptage (Z1 et Z11) des deux compteurs et à délivrer un signal qui correspond à la comparaison et qui autorise la modification du compteur à étages multiples (11).
